(19) Europäisches Patentamt / European Patent Office / Office européen des brevets

(11) **EP 4 528 975 A2**

(12) **EUROPEAN PATENT APPLICATION**

(43) Date of publication:
26.03.2025 Bulletin 2025/13

(51) International Patent Classification (IPC):
*H02J 7/00* (2006.01)    *B25F 5/00* (2006.01)

(21) Application number: 24201728.3

(22) Date of filing: 20.09.2024

(52) Cooperative Patent Classification (CPC):
H02J 7/0063; B25F 5/00; H02J 7/00306;
H02J 7/007182

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 22.09.2023 US 202363584773 P

(71) Applicant: Milwaukee Electric Tool Corporation
Brookfield, WI 53005 (US)

(72) Inventors:
• ERTL, Daniel R
  Wisconsin, 53040 (US)
• GORDON, Patrick
  Wisconsin, 53211 (US)
• TOWNSAN, Joel T.
  Wisconsin, 53189 (US)
• HERSH, Murray Ethan
  Wisconsin, 53217 (US)

(74) Representative: Forresters IP LLP
Skygarden
Erika-Mann-Straße 11
80636 München (DE)

(54) **MEASURING VOLTAGE SAG OF BATTERY PACK TO IDENTIFY BATTERY PACK AND CONTROL PERFORMANCE**

(57)    A battery-pack-powered device includes an interface configured to receive a battery pack, a sensing circuit configured to detect a voltage of the battery pack, and an electronic controller. The electronic controller is configured to receive a first signal from the sensing circuit indicative of a no-load voltage of the battery pack, determine a threshold voltage based on the no-load voltage, generate a control signal to drive an electric motor at a first operating parameter in response to an activation of a trigger switch, receive a second signal from the sensing circuit, and update the control signal to drive the electric motor at a second operating parameter less than the first operating parameter in response to the second signal indicating that the output voltage is below the threshold voltage. The second signal is indicative of an output voltage of the battery pack during operation of the electric motor.

FIG. 4

**Description**

RELATED APPLICATIONS

This application claims the benefit of U.S. Provisional Application No. 63/584,773 filed September 22, 2023. The entire disclosure of the above application is hereby incorporated by reference.

FIELD

The present disclosure relates to power tools and, more particularly, to battery-powered tools.

SUMMARY

Using a common interface format for power tool battery packs brings a variety of technical and practical benefits. For example, users may be able to easily swap battery packs between different tools without needing to have specific battery packs for each tool. If a battery pack fails or runs out of charge, the pack can be quickly swapped with another battery pack, such as, from a different tool. Having a common interface format also allows different battery packs from different tools to be charged on the same charger. These improvements to interoperability greatly improve the flexibility of a power tool system. However, different battery packs may have different capabilities. These differences in capability may result from differences in design or result from the natural degradation of the battery cell chemistry or performance over time.

For example, battery packs of different capabilities may have different internal resistances. Some higher-capacity battery packs may have lower internal resistances than some lower-capacity battery packs. Some higher-capacity battery packs may have more active material in the electrodes, thicker electrodes, and/or electrodes having a larger electrode surface area, which may reduce the internal resistance of the battery pack. Higher-capacity battery packs may also have more cells arranged in parallel, which may also reduce the internal resistance of the battery pack. Higher-capacity battery packs may also use higher quality electrolyte solutions, which can also aid in reducing the internal resistance. As a function of their lower internal resistance, higher-capacity battery packs may exhibit a lower voltage drop (also referred to as a voltage sag) than a lower-capacity battery pack in response to the same current draw demand.

This voltage drop $V$ may be expressed as a function of the current draw $I$ and the internal resistance $R$ of the battery pack according to Ohm's law, equation (1) below:

$$V = I \cdot R \qquad\qquad (1)$$

As illustrated by equation (1), the voltage drop $V$ of the battery pack in response to the current draw $I$ may scale linearly as a function of the internal resistance $R$. Accordingly, as described herein, a power tool (e.g., an electronic controller included in the tool) is configured to use the voltage drop $V$ exhibited by a battery pack in response to a given load (such as current $I$) to determine a capacity of the battery pack and optimize control signals for the power tool based on the capacity of the battery pack.

Techniques (such as techniques described in this specification) that use voltage drops to determine the capacities of battery packs may offer advantages over techniques that measure other characteristics (such as impedance), particularly at colder temperatures. For example, the impedance of a battery pack includes and/or is a function of both resistive components (e.g., resistance) and reactive components (e.g., chemical reactions within the battery pack). Since the chemical reactions within the battery pack may tend to slow down at colder temperatures, the impedance of the battery cell tends to increase more than the impedance at the colder temperatures. As the voltage drop of a battery pack may be a function of the resistance of the battery pack, voltage-drop-based techniques (such as techniques described in this specification) offer more accurate assessments of battery pack capability at colder temperatures than other impedance-based techniques.

The invention is as set out in the appended set of claims.

According to an aspect of the described technology, we provide a battery-pack-powered device, such as, for example, a power tool, includes a sensing circuit configured to detect a voltage of the battery pack, and an electronic controller. The electronic controller is configured to receive a first signal from the sensing circuit indicative of a no-load voltage of the battery pack, determine a threshold voltage based on the no-load voltage, generate a control signal for driving an electric motor of the device in response to an activation of a trigger switch, receive a second signal from the sensing circuit, and update the control signal in response to the second signal indicating that the output voltage is below the threshold voltage. The second signal is indicative of an output voltage of the battery pack during operation of the electric motor. The control signal drives the electric motor to operate at a first operating parameter. The updated control signal drives the electric motor to operate at a second operating parameter. The second operating parameter is less than the first operating parameter.

The threshold voltage may be determined as a percentage reduction of a nominal input voltage of the battery-pack-powered device. The percentage reduction may be about a 25% reduction. A nominal input voltage of the battery-pack-powered device may be about 18 volts and the threshold voltage may be about 13.5 volts. The control signal may includes a first pulse-width-modulation signal, the updated control signal may include a second pulse-width-modulation signal, and a duty cycle of the first pulse-width-modulation signal may be greater than a duty cycle of the second pulse-width-modulation signal.

The first operating parameter may be a first power output, the second operating parameter may be a second power output, and the first power output may be greater than the second power output. In some examples, the first operating parameter may be a first torque output, the second operating parameter may be a second torque output, and the first torque output may be greater than the second torque output. In some examples, the first operating parameter may be a first operating duration, the second operating parameter may be a second operating duration, and the first operating duration may be greater than the second operating duration.

According to another aspect of the described technology we provide a battery-pack-powered device, such as, for example, a power tool, that includes an electric motor, an interface configured to receive a battery pack, a sensing circuit configured to detect a voltage of the battery pack, and an electronic controller. The electronic controller is configured to initiate a test current draw from the battery pack, receive a first signal from the sensing circuit, select a first control mode for controlling the electric motor in response to the first signal indicating that the output voltage is not below a threshold, and select a second control mode for controlling the electric motor in response to the first signal indicating that the output voltage is below the threshold. The battery pack powers the electric motor. The first signal is indicative of an output voltage of the battery pack during the test current draw. The electronic controller is configured to generate a first control signal for controlling the electric motor in the first control mode. The electronic controller is configured to generate a second control signal for controlling the electric motor in the second control mode. The second control signal reduces an operating parameter of the electric motor as compared to the first control signal.

The threshold may be determined as a percentage reduction of a designed output voltage of the battery pack. The percentage reduction may be about a 25% reduction. A designed output voltage of the battery pack may be about 18 volts and the threshold is about 13.5 volts. The first control signal may be a pulse-width-modulation signal having a first duty cycle, the second control signal may be a pulse-width-modulation signal having a second duty cycle, and the first duty cycle may be greater than the second duty cycle.

In some examples, the first control signal may control the electric motor to operate at a first power output, the second control signal may control the electric motor to operate at a second power output, and the first power output may be greater than the second power output. In some examples, the first control signal may control the electric motor to operate at a first torque output, the second control signal may control the electric motor to operate at a second torque output, and the first torque output may be greater than the second torque output. In some examples, the first control signal may control the electric motor to operate for a first duration, the second control signal may control the electric motor to operate for a second duration, and the first duration may be longer than the second duration.

According to another aspect of the described technology we provide a method of operating a battery-pack-powered device, such as, for example, a power tool, that includes, in response to activation of a trigger switch, measuring, with a controller, a first voltage of a battery pack electrically connected to the device before application of a load associated with activation of the trigger switch and calculating, with the controller, a target voltage based on the first voltage. During application of the load associated with activation of the trigger switch, the method includes measuring a second voltage of the battery pack, comparing the second voltage to the target voltage, and modifying operation of the battery-pack-powered device in response to the second voltage being less than the target voltage.

Calculating the target voltage may include reducing the first voltage by a predetermined percentage. Modifying operation of the battery-pack-powered device may include modifying a pulse-width-modulated control signal for an electric motor of the battery-pack-powered device. Modifying operation of the battery-pack-powered device may include modifying operation of the battery-pack-powered device using a proportional integral control loop.

Other examples, embodiments, features, and aspects will become apparent by consideration of the detailed description and accompanying drawings.

Before any embodiments are explained in detail, it is to be understood that the embodiments are not limited in application to the details of the configurations and arrangements of components set forth in the following description or illustrated in the accompanying drawings. The embodiments are capable of being practiced or of being carried out in various ways. Also, it is to be understood that the phraseology and terminology used herein are for the purpose of description and should not be regarded as limiting. The use of "including," "comprising," or "having" and variations thereof are meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings.

Unless the context of their usage unambiguously indicates otherwise, the articles "a," "an," and "the" should not be interpreted as meaning "one" or "only one." Rather these articles should be interpreted as meaning "at least one" or "one or more." Likewise, when the terms "the" or "said" are used to refer to a noun previously introduced by the indefinite article "a" or "an," "the" and "said" mean "at least one" or "one or more" unless the usage unambiguously indicates otherwise.

In addition, it should be understood that embodiments may include hardware, software, and electronic components or modules that, for purposes of discussion, may be illustrated and described as if the majority of the components were implemented solely in hardware. However, one of ordinary skill in the art, and based on a reading of this detailed description, would recognize that, in at least one embodiment, the electronic-based aspects may be implemented in software (e.g., stored on non-transitory computer-readable medium) executable by one or more processing units, such as a microprocessor and/or application specific integrated circuits ("ASICs"). As such, it should be noted that a plurality of hardware and software based devices, as well as a plurality of different structural components, may be utilized to implement the embodiments. For example, "servers," "computing devices," "controllers," "processors," etc., described in the specification can include one or more processing units, one or more computer-readable medium modules, one or more input/output interfaces, and various connections (e.g., a system bus) connecting the components.

Relative terminology, such as, for example, "about," "approximately," "substantially," etc., used in connection with a quantity or condition would be understood by those of ordinary skill to be inclusive of the stated value and has the meaning dictated by the context (e.g., the term includes at least the degree of error associated with the measurement accuracy, tolerances [e.g., manufacturing, assembly, use, etc.] associated with the particular value, etc.). Such terminology should also be considered as disclosing the range defined by the absolute values of the two endpoints. For example, the expression "from about 2 to about 4" also discloses the range "from 2 to 4." The relative terminology may refer to plus or minus a percentage (e.g., 1%, 5%, 10%) of an indicated value.

It should be understood that although certain drawings illustrate hardware and software located within particular devices, these depictions are for illustrative purposes only. Functionality described herein as being performed by one component may be performed by multiple components in a distributed manner. Likewise, functionality performed by multiple components may be consolidated and performed by a single component. In some embodiments, the illustrated components may be combined or divided into separate software, firmware and/or hardware. For example, instead of being located within and performed by a single electronic processor, logic and processing may be distributed among multiple electronic processors. Regardless of how they are combined or divided, hardware and software components may be located on the same computing device or may be distributed among different computing devices connected by one or more networks or other suitable communication links. Similarly, a component described as performing particular functionality may also perform additional functionality not described herein. For example, a device or structure that is "configured" in a certain way is configured in at least that way but may also be configured in ways that are not explicitly listed.

Accordingly, in the claims, if an apparatus, method, or system is claimed, for example, as including a controller, control unit, electronic processor, computing device, logic element, module, memory module, communication channel or network, or other element configured in a certain manner, for example, to perform multiple functions, the claim or claim element should be interpreted as meaning one or more of such elements where any one of the one or more elements is configured as claimed, for example, to make any one or more of the recited multiple functions, such that the one or more elements, as a set, perform the multiple functions collectively.

BRIEF DESCRIPTION OF THE DRAWINGS

FIG. 1A illustrates a battery pack according to some embodiments described herein.

FIG. 1B illustrates a group of battery cells according to some embodiments described herein.

FIG. 2A illustrates a battery pack according to some embodiments described herein.

FIG. 2B illustrates a group of battery cells according to some embodiments described herein.

FIG. 3 illustrates a device for determining an impedance of a battery pack, such as the battery packs of FIG. 1A or FIG. 2A, according to some embodiments described herein.

FIG. 4 illustrates a control system for a device, such as the device of FIG. 3, according to some embodiments described herein.

FIG. 5 illustrates a circuit diagram for a field-effect transistor (FET) switching module of the device of FIG. 4 according to some embodiments described herein.

FIGS. 6A-6D illustrate circuit diagrams to demonstrate current flow in a circuit, such as the circuit of FIG. 5, according to some embodiments described herein.

FIG. 7 is a block diagram illustrating a power input module of the device of FIG. 4, according to some embodiments described herein.

FIG. 8 is a circuit diagram illustrating a voltage divider circuit of the power input module of FIG. 7, according to some embodiments described herein.

FIGS. 9A, 9B, 10A, and 10B are flowcharts of processes for controlling an operating sequence of a battery-powered device, such as the device of FIG. 3, according to some embodiments described herein.

FIG. 11 illustrates a block diagram of a process for implementing control schemes, according to some embodiments described herein, and a graph showing a measured voltage of a battery pack as a function of time.

FIG. 12 is a block diagram illustrating a feedback loop that may be used to implement control schemes according to some embodiments described herein.

FIG. 13 is a graph illustrating a voltage drop of an example first battery pack in response to a current load as a function of time.

FIG. 14 is a graph illustrating a voltage drop of an example second battery pack (with a lower capacity than the first battery pack of FIG. 13) in response to the same current load as a function of time.

FIG. 15 is a graph illustrating voltage of a battery pack as a function of load and showing regions where a controller generates an updated control signal (under a target voltage), according to some embodiments described herein.

FIG. 16 illustrates graphs showing power outputs of a motor of a battery-powered device during operating cycles implemented with a dynamic threshold update process and operating cycles implemented without a dynamic threshold update process.

FIG. 17 is a block diagram illustrating measurements and calculations that may be used to implement control schemes according to a dynamic threshold update process according to some embodiments.

In the drawings, reference numbers may be reused to identify similar and/or identical elements.

DETAILED DESCRIPTION

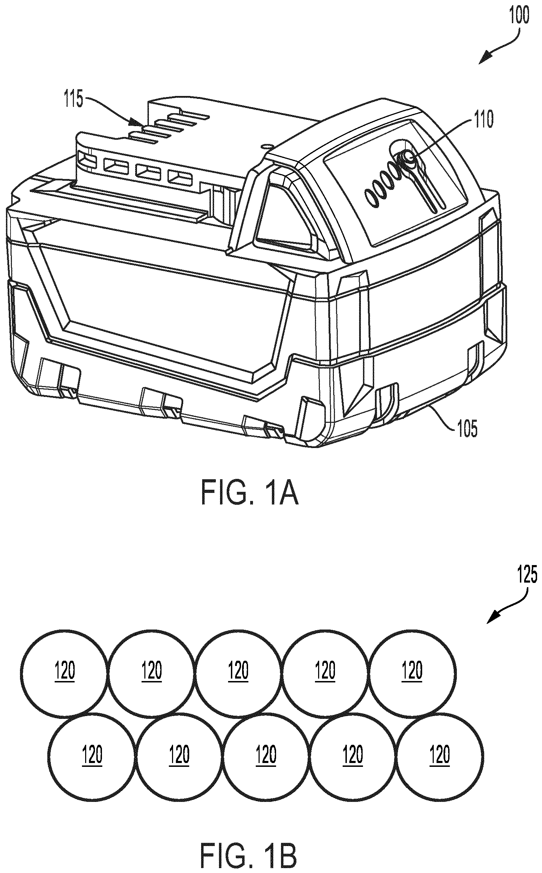

FIG. 1A illustrates a battery pack 100. The battery pack 100 includes a housing 105, an optional user interface portion 110 for providing a state-of-charge indication for the battery pack 100, and a device interface portion 115 for connecting the battery pack 100 (e.g., mechanically and electrically) to a device (e.g., a power tool). The battery pack 100 includes a plurality of battery cells within the housing 105.

FIG. 1B illustrates a group 125 of battery cells 120 that include, for example, ten individual battery cells 120. The battery cells 120 can be located within the housing 105 of the battery pack 100. In some embodiments, the battery pack 100 includes more or fewer than 10 battery cells within the housing 105.

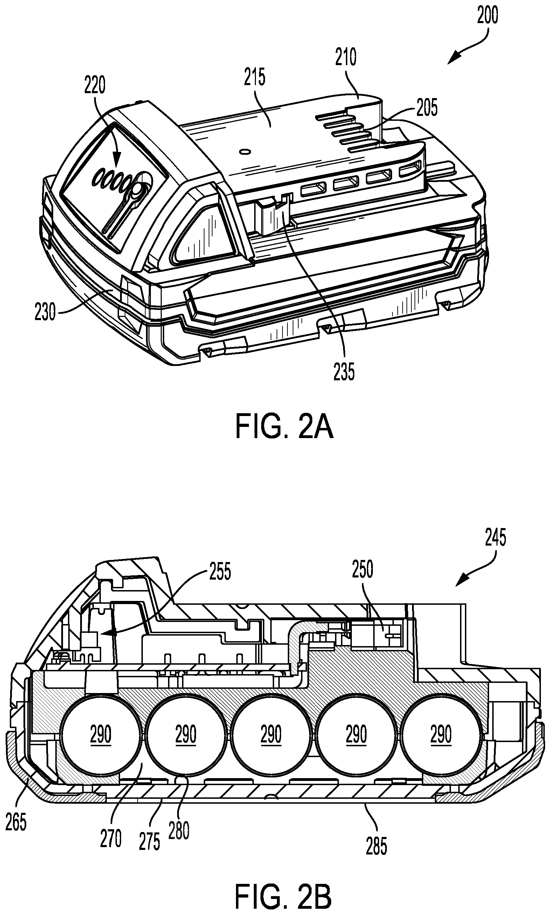

FIG. 2A illustrates a battery pack 200 for powering a device (e.g., a power tool). The battery pack 200 includes a battery housing 230 and, with reference to FIG. 2B, a plurality of battery cells 290.

FIG. 2B illustrates an interior view 245 of the battery housing 230. As illustrated in FIG. 2B, the battery housing 230 includes a wall 265 having an inside surface 280 and an outside surface 275. The inside surface 280 defines an internal cavity 270. The outside surface 275 includes a top surface portion 215 (FIG. 2A) and a bottom portion 285. Referring to FIG. 2B, the battery cells 290 disposed within the cavity 270 are connected in series to battery contacts 205. Referring back to FIG. 2A, a plurality of contacts 250 (FIG. 2B) are disposed on the top surface portion 215, within a battery contacts housing extension 210. The housing extension 210 is configured to matingly engage with one or more power tools or powered accessories. A battery charge level indicator 220 may also be disposed on the housing (FIG. 2A), and additional battery charging, monitoring, and indication components 255 may be disposed within the cavity 270 (FIG. 2B). As shown in FIG. 2A, two tabs 235 are coupled to the housing 230 for releasably securing the housing 230 to a power tool.

Corresponding features to those described above with respect to the battery pack 200 can also be included in the battery pack 100. It should be understood that the battery packs 100 and 200 are provided as example illustrations of a battery pack and battery packs used as part of the embodiments described herein may take various sizes and shapes and may include various numbers and types of battery cells and various numbers and types of tabs or other connection mechanisms for providing a mechanical and electrical connection to the device (e.g., the power tool). Also, it should be understood that battery packs used as part of the embodiments described herein may include additional or fewer components in various configurations and the illustrated packs 100 and 200 are not limiting.

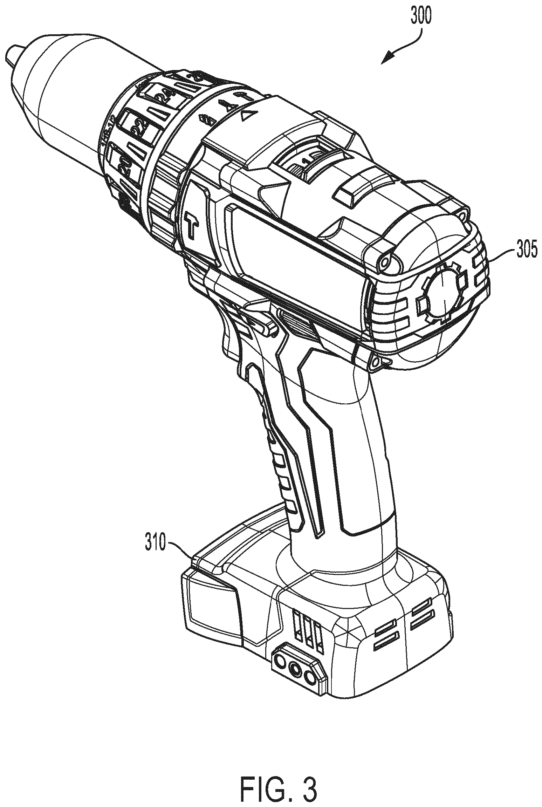

FIG. 3 illustrates a device 300. In the embodiment illustrated in FIG. 3, the device 300 is a power tool (e.g., a drill/driver). In other embodiments, the device 300 is a different type of power tool (e.g., an impact wrench, a ratchet, a saw, a hammer drill, an impact driver, a rotary hammer, a grinder, a blower, a trimmer, etc.) or a different type of device (e.g., a light, a non-motorized sensing tool, etc.). The device 300 includes a housing 305 and an interface portion 310 for connecting the device 300 to, for example, the battery packs 100 and 200.

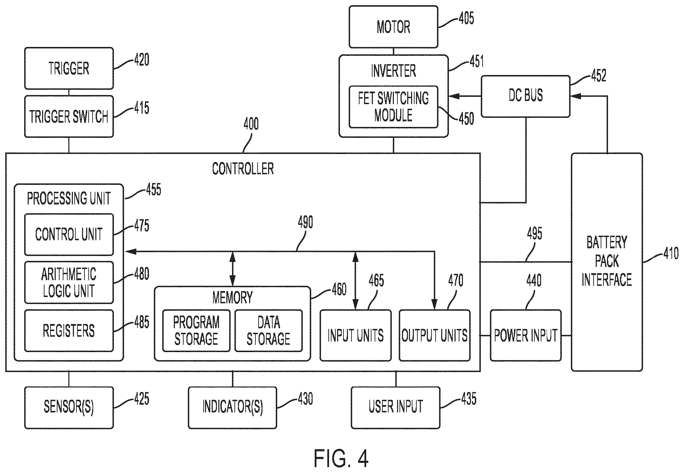

FIG. 4 illustrates a control system for the device 300. The control system includes a controller 400. The controller 400 is electrically and/or communicatively connected to a variety of modules or components of the device 300. For example, the illustrated controller 400 is electrically connected to a motor 405 (e.g., an electric motor), a battery pack interface 410, a trigger switch 415 (connected to a trigger 420), one or more sensors or sensing circuits 425, one or more indicators 430, a user input module 435, a power input module 440, and a FET switching module 450 (e.g., including a plurality of switching FETs). The controller 400 includes combinations of hardware and software that are operable to, among other things, control the operation of the device 300 (e.g., control the operation of the motor 405), monitor the operation of the device 300, activate the one or more indicators 430 (e.g., an LED), etc.

The controller 400 includes a plurality of electrical and electronic components that provide power, operational control, and protection to the components and modules within the controller 400 and/or the device 300. For example, the controller 400 includes, among other things, a processing unit 455 (e.g., a microprocessor, a microcontroller, an electronic processor, an electronic controller, or another suitable programmable device), a memory 460, input units 465, and output units 470. The processing unit 455 includes, among other things, a control unit 475, an ALU 480, and a plurality of registers 485 (shown as a group of registers in FIG. 4) and is implemented using a known computer architecture (e.g., a modified Harvard architecture, a von Neumann architecture, etc.). The processing unit 455, the memory 460, the input units 465, and the output units 470, as well as the various modules or circuits connected to the controller 400 are connected by one or more control and/or data buses (e.g., common bus 490). The control and/or data buses are shown generally in FIG. 4 for illustrative purposes. The use of one or more control and/or data buses for the interconnection between and communication among the various modules, circuits, and components would be known to a person skilled in the art in view of embodiments described herein.

The memory 460 is a non-transitory computer readable medium and includes, for example, a program storage area and a data storage area. The program storage area and the data storage area can include combinations of different types of memory, such as a ROM, a RAM (e.g., DRAM, SDRAM, etc.), EEPROM, flash memory, a hard disk, an SD card, or other suitable magnetic, optical, physical, or electronic memory devices. The processing unit 455 is connected to the memory 460 and executes software instructions that are capable of being stored in a RAM of the memory 460 (e.g., during execution), a ROM of the memory 460 (e.g., on a generally permanent basis), or another non-transitory computer readable medium such as another memory or a disc. Software included in the implementation of the device 300 can be stored in the memory 460 of the controller 400. The software includes, for example, firmware, one or more applications, program data, filters, rules, one or more program modules, and other executable instructions. The controller 400 is configured to retrieve from the memory 460 and execute, among other things, instructions related to the control processes and methods described herein. In other constructions, the controller 400 includes additional, fewer, or different components.

The battery pack interface 410 includes a combination of mechanical components (e.g., rails, grooves, latches, etc.) and electrical components (e.g., one or more terminals) configured to and operable for interfacing (e.g., mechanically, electrically, and, optionally, communicatively connecting) the device 300 with a battery pack (e.g., the battery packs 100 and 200). For example, power provided by the battery pack 100 to the device 300 is provided through the battery pack interface 410 to the power input module 440. The power input module 440 includes combinations of active and passive components to regulate or control the power received from the battery pack 100 prior to power being provided to the controller 400. The battery pack interface 410 also supplies power to the FET switching module 450 to provide power to the motor 405. The battery pack interface 410 may also include, for example, a communication line 495 for providing a communication link between the controller 400 and the battery pack 100.

The indicators 430 may include, for example, one or more light-emitting diodes ("LEDs"). The indicators 430 can be configured to display conditions of or information associated with, the device 300. For example, in some aspects, the indicators 430 are configured to indicate measured electrical characteristics of the device 300, the status of the device 300, etc.

The user input module 435 is operably coupled to the controller 400 to, for example, select a forward mode of operation or a reverse mode of operation, a torque and/or speed setting for the device 300 (e.g., using torque and/or speed switches), or other operation of the device 300. In some embodiments, the user input module 435 includes one or more digital input devices, one or more digital output devices, one or more analog input devices, one or more analog output devices, or a combination, such as, for example, one or more knobs, one or more dials, one or more switches, one or more buttons, etc. In some embodiments, the user input module 435 include a touchscreen usable as an input device, an output device, or a combination thereof.

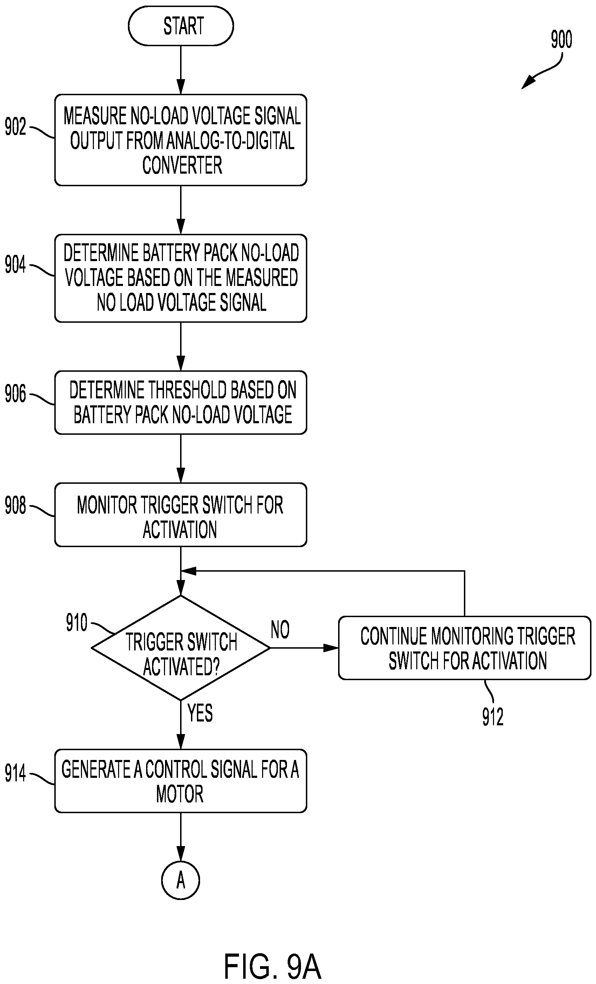

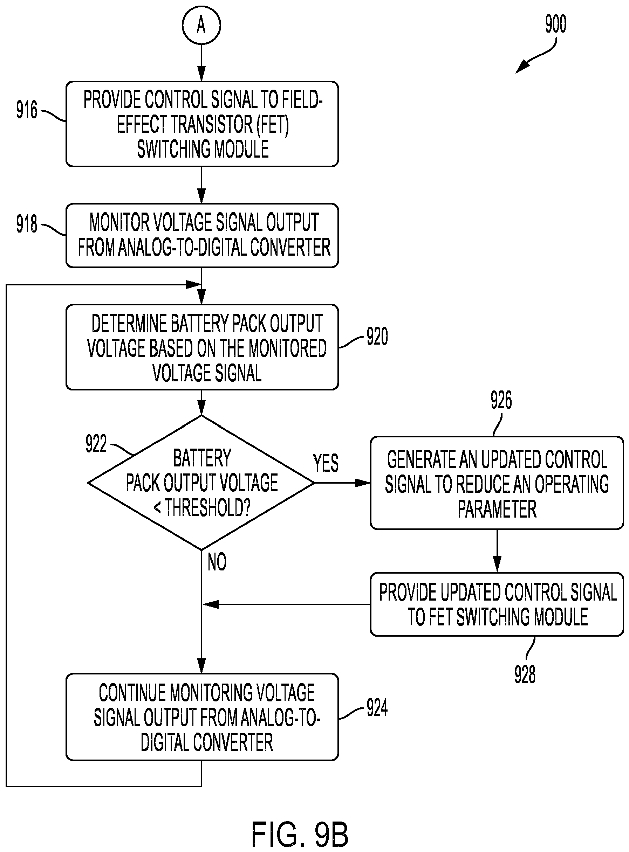

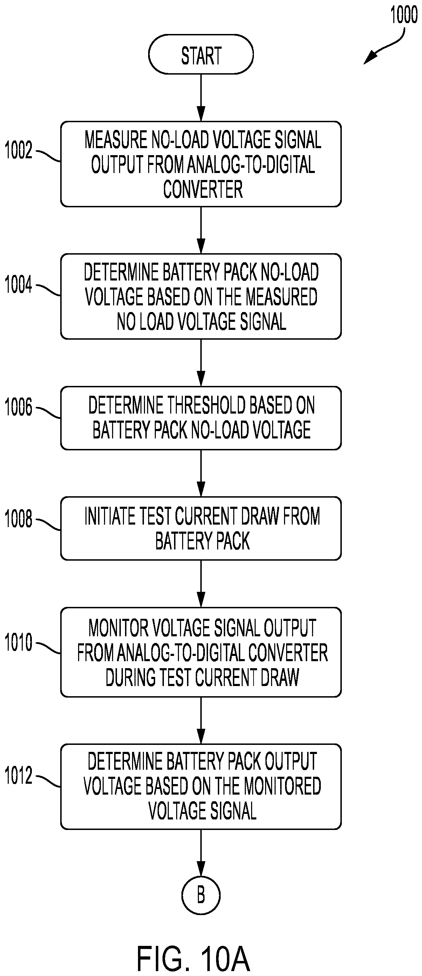

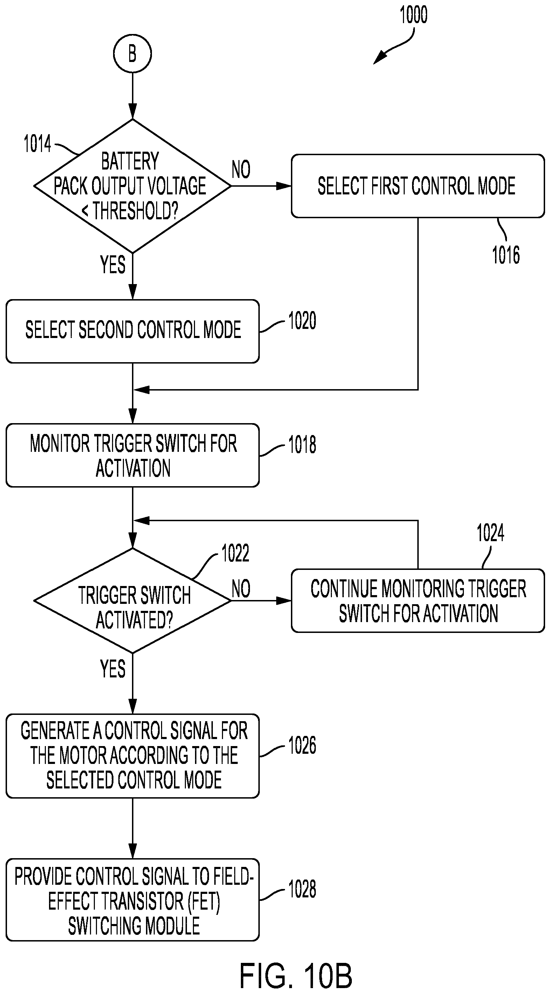

In some aspects, the controller 400 is configured to determine whether a fault condition of the device 300 is present and generate one or more control signals related to the fault condition. For example, the sensing circuits 425 may include one or more current sensors, one or more speed sensors, one or more Hall Effect sensors, one or more temperature sensors, or a combination thereof, and the controller 400 is configured to process data received from the sensing circuits 425 to determine whether a fault condition is present. For example, the controller 400 may be configured to compare data received the sensing circuits 425 (e.g., in a raw form, a processed form, or a combination thereof) to one or more predetermined operational threshold values or limits, which the controller 400 may calculate or access (e.g., within memory 460. For example, when a potential thermal failure (e.g., of a FET, the motor 405, etc.) is detected or predicted by the controller 400, the controller 400 may be configured to limit or interrupt power supplied to the motor 405 from an interfaced battery pack until, for example, the potential for thermal failure is reduced, the device 300 is reset, etc. In some aspects, the controller 400 is configured to, in response to detecting one or more such fault conditions of the device 300 or determining that a fault condition of the device 300 no longer exists, provide information and/or control signals to another component of the device 300 (e.g., the indicators 430), the battery pack 100 or 200 (e.g., via the battery pack interface 410), or a combination thereof. As described in more detail with respect to FIGS. 9A, 9B, 10A, and 10B, in some aspects, the controller 400 uses the sensing circuits 425 to determine a capacity (e.g., internal impedance) of a body pack interfaced with the device 300 in addition to or as an alternative to using the sensing circuit 425 to detect a fault condition.

In various implementations, the FET switching module 450 may be connected to or be a part of an inverter 451 that provides alternating current (AC) power to the motor 405. For example, the battery pack interface 410 may be connected to a direct current (DC) bus 452, and the DC bus 452 may be connected to the inverter 451 and/or the FET switching module 450. The battery pack interface 410 may provide DC power to the DC bus 452. The DC bus 452 may provide DC power to the inverter 451. The inverter 451 may include switching devices, such as the FET switching module 450, and control the switching devices to create an AC waveform from the source DC power. The inverter 451 may provide the AC waveform as AC power to drive the motor 405. As illustrated in FIG. 4, in some examples, the controller 400 may be connected to the inverter 451 and/or DC bus 452 to monitor and/or control the inverter 451 and/or DC bus 452.

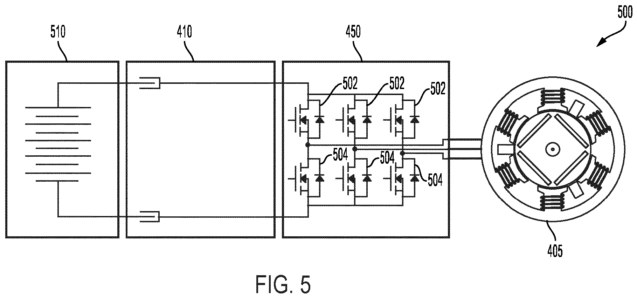

FIG. 5 illustrates a circuit diagram 500 of the FET switching module 450. The FET switching module 450 includes a plurality of high side power switching elements 502 and a plurality of low side power switching elements 504. In some aspects, the controller 400 provides control signals to control the high side FETs 502 and the low side FETs 504 to drive the motor 405. For example, in response to detecting an activation of the trigger 420, the controller 400 provides one or more control signals to selectively enable and disable the FETs 502 and 504 (e.g., sequentially, in pairs) resulting in power from the power source 510 (e.g., one of the battery packs 100 and 200 interfaced with the device 300) to be selectively applied to stator coils of the motor 405 to cause rotation of a rotor. More particularly, to drive the motor 405, the controller 400 enables a first high side FET 502 and first low side FET 504 pair (e.g., by providing a voltage at a gate terminal of the FETs) for a first period of time. In response to determining that the rotor of the motor 405 has rotated based on a pulse from the sensing circuits 425, the controller 400 disables the first FET pair and enables a second high side FET 502 and a second low side FET 504. In response to determining that the rotor of the motor 405 has rotated (e.g., based on pulse(s) from the sensing circuits 425), the controller 400 disables the second FET pair and enables a third high side FET 502 and a third low side FET 504. This sequence of cyclically enabling pairs of high side FET 502 and low side FET 504 repeats to drive the motor 405. Further, in some embodiments, the control signals include pulse width modulated (PWM) signals having a duty cycle that is set in proportion to the amount of trigger pull of the trigger 420, to thereby control the speed or torque of the motor 405. It should be understood that the device 300 may include a different configuration for controlling power from the power source 510 to the motor 405 and the FET 504 and associated components are provided as one non-limiting example.

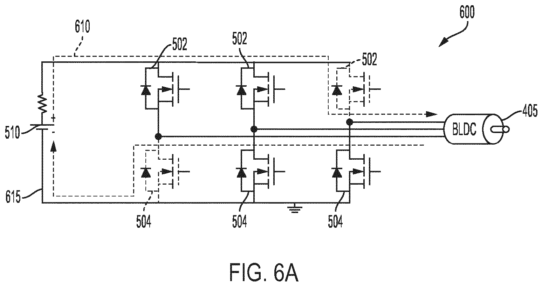

For example, FIG. 6A illustrates a current flow diagram 600 of the FET switching module 450. The FET switching module 450 includes the plurality of high side power switching elements 502 and the plurality of low side power switching elements 504, as described above. For example, in response to detecting a pull of the trigger 420, the controller 400 provides one or more control signals to selectively enable and disable the FETs 502 and 504 (e.g., sequentially, in pairs) resulting in power being provided from the power source 510 (e.g., battery pack 100, 200). Current 610 travels from the power source 510 through one of the high side power switching elements 502 to stator coils of the motor 405. The current 610 then travels from the motor 405 to one of the low side power switching elements 504 before completing a path of connection 615 of the power source 510.

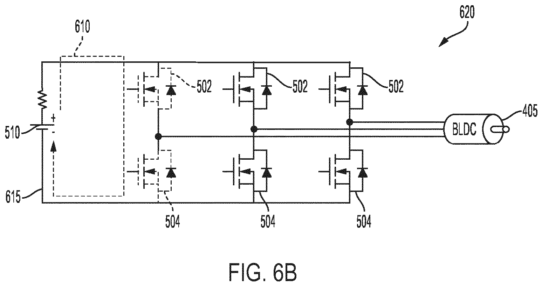

FIG. 6B illustrates another current flow diagram 620 of the FET switching module 450. The FET switching module 450 includes the plurality of high side power switching elements 502 and the plurality of low side power switching elements 504, as described above. For example, in response to detecting a pull of the trigger 420, the controller 400 provides one or more control signals to selectively enable and disable the FETs 502 and 504 (e.g., sequentially, in pairs) resulting in power being provided from the power source 510 (e.g., battery pack 100, 200). Current 610 travels from the power source 510 through one high side power switching elements 502, to one low side power switching elements 504. The current 610 closes the circuit by then returning to the power source 510. This reduced current 610 path only travels through two switching FETs and completes a shorter portion of the path of connection 615 of the power source 510. In some aspects, one or more high side power switching elements 502 and/or one or more low side power switching elements 504 are enabled at the same time. Such control may decrease the overall resistance of the system and enable higher current flow and distributing the load of the system through the FETs 502 and 504 to reduce FET 502 and 504 burnup.

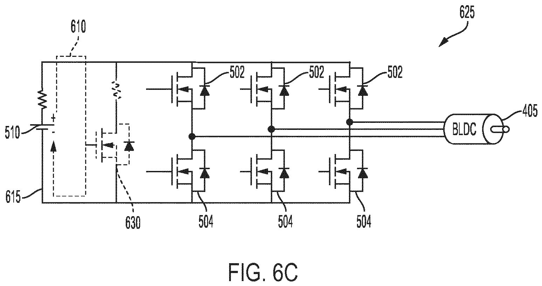

FIG. 6C also illustrates another current flow diagram 625 of the FET switching module 450. In this example, an additional switching module 630 is connected to the path of connection 615. In addition to the additional switching module 630, an additional resistor is connected to the path of connection 615. For example, in response to detecting a pull of the trigger 420, the controller 400 provides one or more control signals to selectively enable and disable the switching module 630 resulting in power being provided from the power source 510 (e.g., battery pack 100, 200). Current 610 travels from the power source 510 through the additional resistor, then through the additional switching module 630. In this example, the current 610 only travels through the additional resistor and the additional switching module 630 before returning to the power source 510 to close the circuit. In other aspects, an inductor can be used for similar purposes as the additional resistor. Additionally, other circuitry configurations may be configured in such a way that other components can be used (e.g., a capacitor).

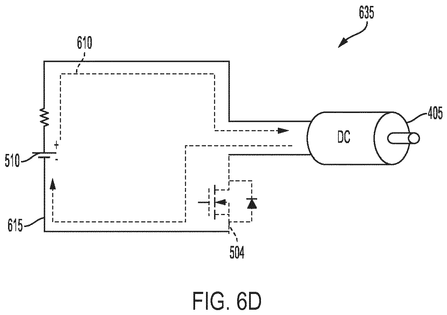

FIG. 6D illustrates yet another current flow diagram 635 of the FET switching module 450. In this example, only one power switching module 504 is used. For example, in response to detecting a pull of the trigger 420, the controller 400 provides one or more control signals to selectively enable and disable the power switching element 504 resulting in power being provided from the power source 510 (e.g., battery pack 100, 200). Current 610 travels from the power source 510 to the motor 405 (e.g., a brushed motor) and to the power switching element 504 before closing the path of connection 615.

Again, embodiments described herein may be used with various types of battery packs and battery-powered devices and the details provided in FIGS. 1 through 6D are provided as non-limiting illustrative examples.

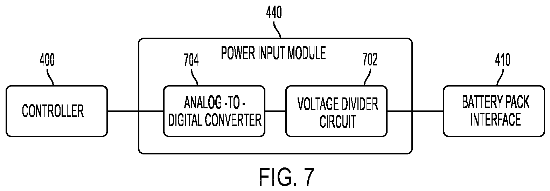

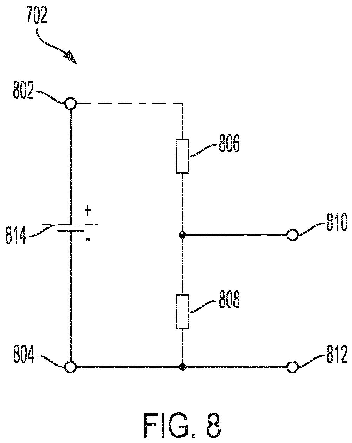

FIG. 7 is a block diagram illustrating the power input module 440 according to some embodiments. In various implementations, the power input module 440 includes a voltage divider circuit 702 and an analog-to-digital converter 704. The inputs of the voltage divider circuit 702 may be coupled to the positive and negative terminals of the battery pack interface 410. The voltage divider circuit 702 may step the output voltage of the battery pack connected to the battery pack interface 410 (such as battery pack 100 or battery pack 200) down and output the stepped-down voltage to the analog-to-digital converter 704. The analog-to-digital converter 704 converts the analog stepped-down voltage signal to a digital signal and outputs the digital signal to the controller 400. As described in more detail with respect to FIG. 8, the controller 400 may determine the output voltage of the battery pack connected to the battery pack interface 410 based on the digital signal output from the analog-to-digital converter 704. For instance, in examples where the power input module 440 includes the voltage divider circuit 702, the controller 400 may determine an actual voltage of the battery pack based on the stepped-down voltage output from the voltage divider circuit 702 to the analog-to-digital converter 704 according to the voltage divider equation appropriate to the voltage divider circuit 702.

FIG. 8 is a circuit diagram illustrating the voltage divider circuit 702 according to some embodiments. As illustrated in FIG. 8, some implementations of the voltage divider circuit 702 include a first input terminal 802 and a second input terminal 804, and a first resistor 806 and a second resistor 808 arranged in series between the first input terminal 802 and the second input terminal 804. A first output terminal 810 may be connected to a first node between the first resistor 806 and the second resistor 808, and a second output terminal 812 may be connected to a second node between the second input terminal 804 and the second resistor 808. In some embodiments, a battery pack (represented by battery 814 in FIG. 8, which may include the battery pack 100 or 200 described herein) may be connected to the first input terminal 802 and the second input terminal 804. For example, a positive terminal of the battery 814 may be connected to the first input terminal 802 and a negative terminal of the battery 814 may be connected to the second input terminal 804. Thus, an input voltage $V_{in}$ from the battery 814 may be applied across the first resistor 806 and the second resistor 808. Because the first resistor 806 and the second resistor 808 may be connected in series, the input voltage $V_{in}$ may be divided between the first resistor 806 and the second resistor 808 according to the resistance $R_1$ of the first resistor 806 and the resistance $R_2$ of the second resistor 808.

In examples where the first output terminal 810 and the second output terminal 812 are connected across the second resistor 808, the output voltage $V_{out}$ of the voltage divider circuit 702 (measured across the first output terminal 810 and the second output terminal 812) may be expressed according to voltage divider equation (2) below, which is derived from Ohm's law and the voltage division principle:

$$V_{out} = V_{in} \cdot \frac{R_2}{R_1 + R_2} \qquad (2)$$

The relationship between the resistances in voltage divider equation (2) above may be expressed as a transfer function *H,* shown in equation (3) below.

$$H = \frac{R_2}{R_1 + R_2} \qquad (3)$$

Thus, as described in more detail with respect to FIG. 8, the controller 400 may calculate the voltage of the battery 814 (represented by $V_{in}$) based on the voltage output from the voltage divider circuit 702 (represented by $V_{out}$) and the transfer function *H* of the voltage divider circuit 702 according to equation (4) below:

$$V_{in} = \frac{V_{out}}{H} \qquad (4)$$

While the voltage divider circuit 702 is illustrated as having two resistors and the transfer function *H* is expressed as a function of two resistances, it should be appreciated that the voltage divider circuit 702 may include any number of resistors and the transfer function *H* may be any suitable value.

FIGS. 9A-9B are a flowchart of a process 900 for controlling an operating sequence of the device 300 according to some embodiments, and in particular, represents a process for determining, based on a measured voltage, a characteristic (e.g., a capacity, impedance, etc.) of a battery pack electrically connected to the device 300, and using the determined characteristic to generate one or more control signals for controlling the motor 405. Although operations of the process 900 are illustrated with reference to particular examples described herein, the process 900 may be implemented in any suitable setting. Operations are illustrated once each and in a particular order in FIGS. 9A-9B, but the operations may be reordered and/or repeated as desired and appropriate. For example, different operations may be performed in parallel, as suitable. In various implementations, a battery pack having a higher capacity may exhibit a lower (smaller) voltage drop in response to a given current draw than a battery pack having a lower capacity. Accordingly, the voltage drop of a battery pack in response to the given current draw may be used to determine a capacity of the battery pack connected to the device 300, and the controller 400 may operate the device 300 according to a control mode optimized for the capacity of the battery pack. For example, in response to determining that the battery pack is a higher-capacity battery pack, the controller 400 may control the motor 405 to operate at a higher operating parameter. By contrast, in response to determining that the battery pack is a lower-capacity battery pack, the controller 400 may control the motor 405 to operate at a lower operating parameter. In various implementations, the operating parameter may be a speed of the motor 405. In some embodiments, the operating parameter may be a power output (for example, the torque output $\tau$ times the angular velocity $\omega$) of the motor 405. In some examples, the operating parameter may be a torque output of the motor 405. In various implementations, the operating parameter may be a runtime (operational duration) of the motor.

At block 902, the controller 400 measures a no-load voltage signal of the battery pack connected to the device 300 (such as battery pack 100 or 200 connected to the interface portion 310). For example, the voltage divider circuit 702 may step down a no-load voltage of the battery pack taken across positive and negative terminals of the battery pack at the battery pack interface 410 when there is no current load (or a minimal current load) on the battery pack. The analog-to-digital converter 704 may convert the analog no-load voltage of the battery pack to a digital no-load voltage signal and output the digital no-load voltage signal to the controller 400. At block 904, the controller 400 determines the no-load voltage of the battery pack based on the digital no-load voltage signal. In various implementations, the no-load voltage signal represents a stepped-down no-load voltage output from voltage divider circuit 702, and the controller 400 converts the stepped-down no-load voltage to the no-load voltage of the battery pack according to the transfer function of the voltage divider circuit 702 (for example, as previously described with reference to FIGS. 7 and 8).

At block 906, the controller 400 determines a threshold based on the no-load voltage of the battery pack. In various implementations, the threshold may be set as a percentage of the no-load voltage. For example, the threshold may be set as a percentage of the no-load voltage and may define a target voltage, wherein a measured voltage drop above the target voltage indicates a high-capacity battery pack and a measured voltage drop at or below the target voltage indicates a low capacity battery pack. In various implementations, the threshold may be set to a value of about 15%, 20%, 25%, 30%, 35%, or 40% (or any other value between the range of about 15% and about 40%). However, in some implementations, the threshold be set to other values, such as, example, about 5%, 10%, 15%, 20%, 25%, 30%, 35%, 40%, 45%, 50%, 55%, 60%, 65%, 70%, 75%, 80%, 85%, 90%, or 95% of the no-load voltage or various values in between. In some embodiments, rather than calculating the threshold from a measured value, the controller 400 may be preprogrammed with the threshold, which may be stored and associated (e.g., through a look-up table or other data structure or data mapping mechanism) with a threshold value. Accordingly, the controller 400, after determining the no-load voltage, may determine the threshold by retrieving the appropriate threshold from a memory. Also, in some embodiments, the controller 400 may determine the no-load voltage of the battery pack based on other values, such as data communicated between the device 300 and the connected battery pack, a stored voltage setting for the device 300, or a combination thereof. For example, the threshold may be set as a percentage of a nominal voltage of the battery pack and/or a nominal voltage of the device 300. The nominal voltage may be a voltage that the battery pack is designed to output in normal operation and/or a voltage that the device 300 is designed to receive from the battery pack in normal operation. For example, if the nominal voltage of the battery pack and/or device 300 is about 18 volts, then the threshold may be set according to table 1 below:

**Table 1**

| Nominal Voltage | Percentage Reduction | Threshold Value |
|---|---|---|
| 18 volts | 5% | 0.9 |
| 18 volts | 10% | 1.8 |
| 18 volts | 15% | 2.7 |
| 18 volts | 20% | 3.6 |
| 18 volts | 25% | 4.5 |
| 18 volts | 30% | 5.4 |
| 18 volts | 35% | 6.3 |
| 18 volts | 40% | 7.2 |
| 18 volts | 45% | 8.1 |
| 18 volts | 50% | 9 |
| 18 volts | 55% | 9.9 |
| 18 volts | 60% | 10.8 |
| 18 volts | 65% | 11.7 |
| 18 volts | 70% | 12.6 |
| 18 volts | 75% | 13.5 |
| 18 volts | 80% | 14.4 |
| 18 volts | 85% | 15.3 |
| 18 volts | 90% | 16.2 |
| 18 volts | 95% | 17.1 |

While the controller 400 may be configured to determine the threshold without measuring a no-load voltage of the battery pack, measuring this voltage may allow the controller 400 to set an appropriate threshold based on a current state of the battery pack.

In various implementations, the threshold value, a percentage reduction from the nominal voltage, and/or a percentage reduction from the no-load voltage can be set based on empirical data for a particular type of device and one or more loads (or ranges of loads). In some embodiments, the empirical data may include different operating applications or environments of the device 300, which may be used to establish a tuned threshold. The controller 400 may also be configured to tune (e.g., increase or decrease) a threshold based on a current operating application or environment of the device 300 (e.g., based on a measured temperature, an operating mode of the device 300, an accessory installed on the device 300, or the like).

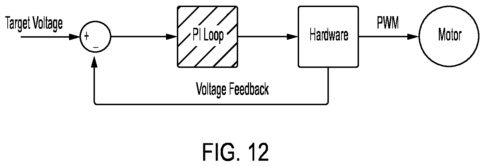

At block 908, the controller 400 monitors the trigger switch 415 for activation. It should be understood that although process 900 illustrates the threshold being set prior to activation of the trigger switch 415 (e.g., as part of an initialization or configuration process of the device 300), in some implementations, (see, e.g., FIG. 12 and associated description) the threshold determination described with respect blocks 902-906 may occur after the trigger switch 415 is activated but before a load is applied to the battery pack associated with the trigger activation. Measuring the no-load voltage close in time to application of a load may result in increased optimization of the battery pack as a more accurate threshold may be set based on a current state of the battery pack.

As previously described, the trigger switch 415 may be connected to the trigger 420, and the trigger 420 may actuate the trigger switch 415. In various implementations, the trigger switch 415 may include an on-off switch, and actuation of the trigger 420 closes the on-off switch. In some embodiments, the trigger switch 415 may include a variable resistor, such as a potentiometer. The variable resistor may change a resistance of the trigger switch 415 based on a position of the trigger 420, which in turn alters the voltage and/or current of the signal output from the trigger switch 415 based on the position of the trigger 420. In some examples, the trigger switch 415 may include a Hall effect sensor. The Hall effect sensor may be used to detect the position of the trigger 420, and the voltage and/or current of the signal output from the trigger switch 415 may be adjusted based on the position of the trigger 420.

At decision block 910, the controller 400 determines whether the trigger switch 415 has been activated. In response to determining that the trigger switch 415 has not been activated ("NO" at decision block 910), the controller 400 continues monitoring the trigger switch for activation at block 912 and the process 900 returns to decision block 910. In response to the controller 400 determining that the trigger switch 415 has been activated ("YES" at decision block 910), the controller 400 generates one or more control signals for the motor 405 of the device 300 at block 914. In various implementations, the control signal may be an analog signal, such as a voltage signal (e.g., a continuous signal where changes in voltage may be used to control parameters of the motor 405) or a current signal (e.g., a continuous signal where changes in current may be used to control parameters of the motor 405). In some examples, the control signal may be a digital signal, such as a pulse-width-modulation (PWM) signal. In examples where the control signal is a PWM signal, the duty cycle (e.g., the ratio of the on time to the total period of the signal) may be modulated to control operating parameters of the motor 405. In various embodiments, the operating parameters of the motor 405 may include a speed, power, torque, and/or a runtime of the motor 405.

At block 916, the controller 400 controls the motor 405 using the generated control signal(s). For example, in implementations where the control signal is a PWM signal, the controller 400 may provide the control signal to the FET switching module 450, and the FET switching module 450 may drive the motor 405 based on the control signal, which applies a load to the battery pack electrically connected to the device 300. At block 918, the controller 400 monitors the output voltage of the battery pack connected to the battery pack interface 410 (such as battery pack 100 or 200) with the application of the load. For example, the controller 400 monitors the digital signal output from the analog-to-digital converter 704. At block 918, the controller 400 determines the output voltage of the battery pack connected to the battery pack interface 410. For example, the controller 400 calculates the output voltage of the battery pack based on the digital signal output from the analog-to-digital converter 704 according to techniques previously described with reference to FIGS. 7 and 8.

At decision block 922, the controller 400 determines whether the battery pack output voltage is less than the threshold. As described herein, in various implementations, the threshold may be dynamically determined by the controller 400 (for example, according to the process previously described with reference to block 902-906). In other embodiments, the controller 400 may be pre-programmed with the threshold (for example, as previously discussed with reference to process 900 and/or table 1). In response to determining that the battery pack output voltage is not below the threshold ("NO" at decision block 922), the controller 400 continues monitoring the output voltage of the battery pack (for example, by monitoring digital signal output from analog-to-digital converter 704) at block 924 and the process 900 returns to block 920. In response to determining that the battery pack output voltage is below the threshold ("YES" at decision block 922), the controller 400 generates an updated control signal at block 926. For example, the updated control signal may reduce an operating parameter (e.g., speed, power, torque, and/or runtime) of the motor 405 relative to the control signal generated at block 914. In various implementations, the control signal may be an analog control signal used to drive the motor 405, and the updated control signal generated at block 926 may have a reduced voltage, current, and/or duration compared to the control signal generated at block 914. In some examples, the control signal may be a PWM control signal provided to the FET switching module 450, and the updated control signal generated at block 926 may have a reduced duty cycle compared to the control signal generated at block 914. In some examples, the controller 400 may reduce the duration that the control signal is provided to the motor 405. At block 928, the controller 400 provides the updated control signal to the motor 405 (for example, via the FET switching module 450). From block 928, the process 900 proceeds to block 924.

It should be understood that the threshold determination portion of the process 900 may be performed as part of an initialization process, such as, for example, when the device 300 is powered on or reset. Accordingly, a determined threshold may be used in response one or more trigger activations as illustrated in process 900 while the device 300 is being operated (e.g., until the device 300 is powered down or rest). However, in other embodiments, the threshold determination portion of the process 900 may be repeated in response to a request user, a particular input, operation, or condition of the device 300, at a predetermined frequency, or a combination thereof.

It should also be understood that the measurement and monitoring of the voltage of the battery pack during application of the load may be performed while the trigger is activated, for a predetermined amount of time after the initial activation, until a predetermined condition or event occurs, or a combination thereof. For example, in some embodiments, a voltage sag may occur within an initial time after the trigger is activated and, thus, the voltage measurement may be performed during a limited time period after trigger activation.

Control schemes implemented according to process 900 and FIGS. 9A-9B offer a variety of technical benefits to battery-pack-powered devices. For example, the controller 400 may dynamically determine characteristics (such as capacity, impedance, etc.) of a battery pack connected to the device 300 and dynamically adjust the control signal used to control the motor 405 so that operating parameter (such as speed, power, torque, and/or runtime) of the motor 405 is optimized based on the characteristics of the battery pack, which may improve the performance of the battery pack and/or device 300. For instance, the controller 400 may detect when one or more operating parameters of the motor 405 exceed the optimal performance envelope of the battery pack (e.g., by causing an excessive voltage drop at the battery pack) and generate updated operating parameters to bring operation of the motor 405 within the optimal performance envelope of the battery pack.

FIGS. 10A-10B are flowcharts of a process 1000 for controlling an operating sequence of the device 300 according to some embodiments, and in particular, represents determining a characteristic (e.g., a capacity, impedance, etc.) of a battery pack connected to the device 300 via a measured voltage (e.g., voltage drop) and using the determined characteristic to generate one or more control signals for controlling the motor 405. Although operations of the process 1000 are illustrated with reference to particular examples described herein, the process 1000 may be implemented in any suitable setting. Operations are illustrated once each and in a particular order in FIGS. 10A-10B, but the operations may be reordered and/or repeated as desired and appropriate. For example, different operations may be performed in parallel, as suitable. In various implementations, while the previously described process 900 monitors the battery pack as it drives the motor 405 and dynamically adjusts the operating parameter of the motor 405 during operation, the process 1000 may test the battery pack before operation and preselect an operating mode optimized for the battery pack (e.g., based on the determined characteristic of the battery pack). The selected operating mode may thereafter be applied (e.g., when the trigger is activated) without, for example, measuring and monitoring a voltage drop occurring after trigger activation.

As illustrated in FIG. 10A, at block 1002, the controller 400 measures a no-load voltage signal of the battery pack connected to the device 300 (such as the battery pack 100 or 200 connected to the interface portion 310). In various implementations, the controller 400 measures the no-load voltage signal as previously described with reference to block 902. At block 1004, the controller 400 determines a no-load voltage of the battery pack based on the no-load voltage signal (for example, as previously described with reference to block 904). At block 1006, the controller 400 determines a threshold based on the no-load voltage of the battery pack (for example, as previously described with reference to block 906). In various implementations, the controller 400 may be pre-programmed with the threshold (such as previously described with reference to the process 900 and FIGS. 9A-9B).

At block 1008, the controller 400 initiates a test current draw from a battery pack connected to the battery pack interface 410 (such as battery pack 100 or 200). At block 1010, the controller 400 monitors the output voltage of the battery pack during the test current draw. For example, the controller 400 monitors the digital signal output from the analog-to-digital converter 704. At block 1012, the controller 400 determines the output voltage of the battery pack during the test current draw. For example, the controller 400 calculates the output voltage of the battery pack based on the digital signal output from the analog-to-digital converter 704 according to techniques previously described with reference to FIGS. 7 and 8. At decision block 1014, the controller 400 determines whether the output voltage of the connected battery pack is less than the threshold. In various implementations, the threshold may be any of the thresholds previously described with reference to decision block 922 of process 900. In response to determining that the output voltage of the battery pack is not less than the threshold ("NO" at decision block 1014), the controller 400 selects a first operating mode at block 1016 and the process 1000 proceeds to block 1018. In response to determining that the output voltage of the battery pack is less than the threshold ("YES" at decision block 1014), the controller 400 selects a second operating mode at block 1020 and process 1000 proceeds to block 1018. The first operating mode may be associated with a first battery pack capacity (or capacity range), and the second operating mode may be associated with a second, lower battery pack capacity (or capacity range).

At block 1018, after selecting an operating mode, the controller 400 monitors the trigger switch 415 for activation of the trigger switch 415. At decision block 1022, the controller 400 determines whether the trigger switch 415 has been activated. In response to determining that the trigger switch has not been activated ("NO" at decision block 1022), the controller 400 continues monitoring the trigger switch 415 at block 1024 and the process 1000 proceeds back to decision block 1022. In response to determining that the trigger switch has been activated ("YES" at decision block 1022), the controller 400 generates a control signal for the motor according to the selected control mode (at block 1026). In response to the first control mode having been selected, the controller 400 generates a control signal that controls the motor 405 at a baseline operating parameter (such as, for example, a baseline speed, power, torque, and/or runtime). In response to the second mode having been selected, the controller 400 generates an updated or modified control signal that controls the motor 405 at a reduced operating parameter relative to the baseline operating parameter.

In various implementations, the baseline operating parameter may include a first speed and the reduced operating parameter may include a second speed that is less than the first speed. In some examples, the baseline operating parameter may include a first power and the reduced operating parameter may include a second power that is less than the first power. In some embodiments, the baseline operating parameter may include a first torque and the reduced operating parameter may include a second torque that is less than the first torque. In various implementations, the baseline operating parameter may include a first runtime and the reduced operating parameter may include a second runtime that has a duration less than the first runtime. At block 1028, the controller 400 provides the control signal to the motor 405 (for example, via the FET switching module 450).

It should be understood that, in some embodiments, more than two control modes may be used, and each control mode may be associated with different control signals for the motor 405. When more than two control modes are used, more two or more thresholds may be used to (e.g., different thresholds for identifying different voltage drops) determine an appropriate control mode given a capacity of the connected battery pack.

The controller 400 may repeat the control mode selection portion of the process 1000 in response to particular conditions or inputs, according to a predetermined frequency, or a combination thereof. For example, the controller 400 may be configured to repeat the control mode selection portion of the process 1000 at each power-up or reset of the device 300, after a predetermined time period, or a combination thereof.

Accordingly, similar to the process 900, control schemes implemented according to the process 1000 provide a variety of technical benefits to battery-pack-powered devices. Also, using the test current draw allows a control mode to be initially set for the device 300, which may simplify motor control after trigger activation (e.g., by reducing a need for voltage measuring and monitoring as compared to the process 900).

Also, in some examples, the controller 400 may be programmed to implement the process 900, the process 1000, or both processes 900 and 1000. Also, in some implementations, the controller 400 may be programmed to combine aspects of the processes 900 and 1000 in various ways. For example, in some implementations of the process 1000, the controller 400 may be configured to omit block 1008 (the test current draw) and perform blocks 1012-1020 after an initial activation of the trigger switch 415 (for example, after the first time the controller 400 detects that the trigger switch 415 has been at decision block 1022). In such examples, the controller 400 monitors the voltage signal output from analog-to-digital converter 704 as the battery pack drives the motor 405 (instead of monitoring the voltage signal during the test current draw) at block 1010 and selects an appropriate control mode for subsequent operation of the device 300. Accordingly, in this implementation, a control mode can be selected during one activation of the trigger (e.g., an initial activation after the device 300 is turned on), which may reduce or eliminate the need for implementing a test current draw and may reduce or eliminate the need to measure and monitor battery pack voltage during subsequent trigger activations.

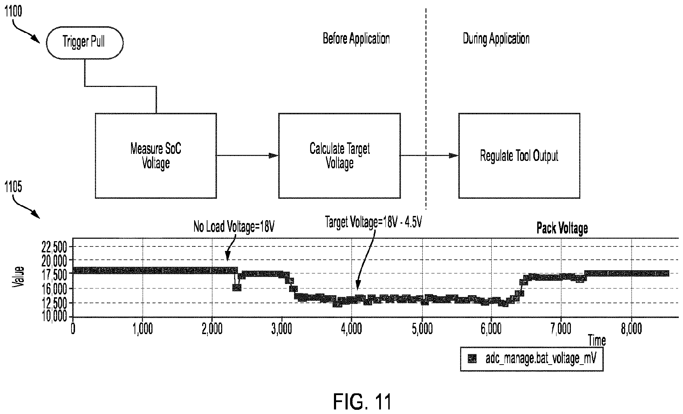

Also, as noted with respect to FIGS. 9A and 9B, in some examples, a threshold is determined in response to activation of a device trigger rather than a as part of an initialization process or configuration process of the device 300. For example, FIG. 11 is a block diagram illustrating a process 1100 for implementing control schemes according to process 900 of FIGS. 9A-9B and/or process 1000 of FIGS. 10A-10B, and a graph 1105 showing a measured voltage of a battery pack as a function of time. As illustrated in FIG. 11, hardware (such as controller 400) may measure the voltage of a battery pack at a state of charge ("SoC Voltage") in response to detecting activation (e.g., pulling) of the trigger 420 but before application of a load otherwise associated with the trigger activation. For example, the SoC voltage may be the no-load voltage determined as previously described with reference to process 900 and FIGS. 9A-9B and/or process 1000 and FIGS. 10A-10B. The hardware may calculate a target voltage according to the SoC Voltage. For example, as previously noted, the target voltage may be the threshold and calculated as previously described with reference to process 900 and FIGS. 9A-9B and/or process 1000 and FIGS. 10A-10B. After the target voltage is calculated, the hardware uses the target voltage to regulate the device (e.g., tool) operation (such as an operating parameter of the motor 405 as described with respect to the processes 900 and 1000). As illustrated in the graph 1105, the hardware may control the motor 405 to operate at a first operating parameter when the measured voltage of the battery pack is above the target voltage and at a second operating parameter less than the first operating parameter when the measured voltage of the battery pack is below the target voltage. For example, in some implementations, when the no-load voltage of the battery pack is about 18 volts, the target voltage may be set to about 13.5 volts.

FIG. 12 is a block diagram illustrating a feedback loop that may be used to implement control schemes according to process 900 of FIGS. 9A-9B, process 1000 of FIGS. 10A-10B, and/or the process 1100 illustrated in FIG. 11. As illustrated in FIG. 12, the controller 400 may be configured to calculate a target voltage (such as the threshold previously described with reference to processes 900 and/or 1000). The target voltage is provided to a proportional integral (PI) control loop (which may be implemented by the controller 400). Hardware (such as the controller 400) generates and provides a control signal (such as a PWM signal) to the motor 405. The hardware measures the voltage of the battery pack as the battery pack is driving the motor 405 in response to the control signal and provides the measured voltage as feedback to the PI control loop. In response to the voltage feedback being above the target voltage, the hardware does not adjust the control signal. However, in response to the voltage feedback being below the target voltage, the hardware updates the control signal (such as by reducing the duty cycle of the PWM signal).

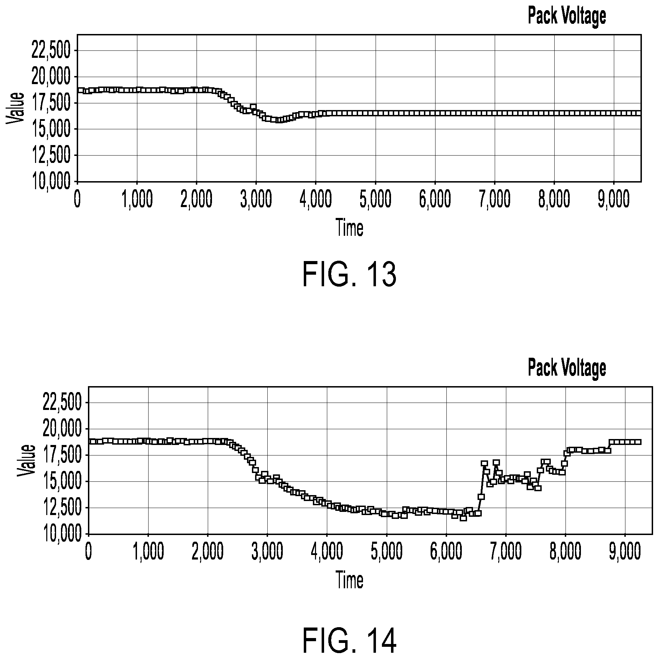

Accordingly, the methods and systems described herein use a voltage drop of a battery pack to determine a characteristic of the battery pack and use the characteristic to optimize operation of a motor of a battery-powered device (e.g., a power tool) based on the determined characteristic. For example, as noted above, the capacity of a battery pack may be based on various factors and, thus, different battery pack may exhibit a different response to the same applied load. For example, FIG. 13 is a graph illustrating a voltage drop of a first battery pack in response to a load as a function of time, and FIG. 14 is a graph illustrating a voltage drop of a second battery pack (having a lower capacity than the first battery pack) in response to the same load as a function of time. As illustrated in FIGS. 13 and 14, a battery pack having a higher capacity (such as the first battery pack) may exhibit a lower voltage drop in response to a current load than a battery pack having a lower capacity (such as the second battery pack).

In some implementations, such as, for example, during longer operating cycles, the output voltage of the battery pack may begin to decrease. In some scenarios, the output voltage of the battery pack may decrease below the threshold voltage, and process 900 and/or 1000 may reduce the operating parameter of the motor 405 in response. However, this gradual decrease in the output voltage of the battery pack over the longer operating cycle may not be indicative of the battery pack's capacity. Thus, it may not be desirable to unnecessarily limit the operating parameter of the motor 405 in response to this gradual decrease in the output voltage of the battery pack. Accordingly, in some embodiments, the threshold at which the controller 400 reduces the operating parameter of the motor 405 (for example, the threshold used at decision block 922 of process 900 and/or the threshold used at decision block 1014 of process 1000) is dynamically updated. By dynamically updating the threshold, the operating parameter of the motor 405 is not limited unnecessarily.

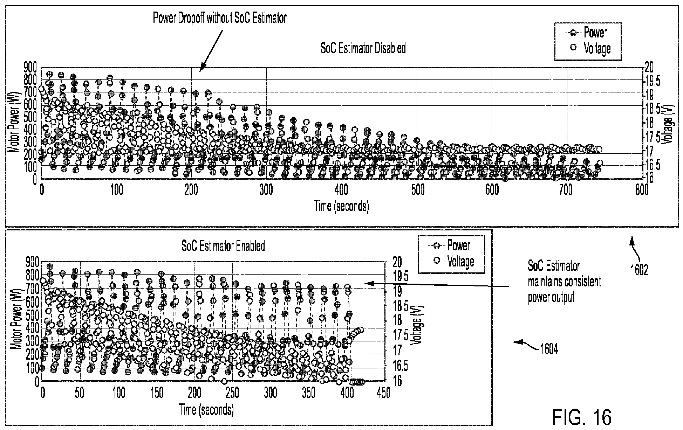

For example, FIG. 16 shows a graph 1602 illustrating a power output over time of a motor 405 controlled according to techniques implemented without the dynamic threshold update, and a graph 1604 illustrating a power output over time of the motor 405 controlled according to techniques implemented with the dynamic threshold update process. As illustrated by graph 1602, control schemes implemented without the dynamic threshold update process may reduce operating parameters (such as output power) of the motor 405 over a longer operating cycle. By contrast, as illustrated by graph 1604, control schemes implemented with the dynamic threshold update process may maintain consistent operating parameters (such as output power) of the motor 405 over the longer operating cycle.

In some embodiments, the dynamic threshold update process uses a state of charge (SoC) estimator algorithm that takes the slowly decreasing pack voltage into account as the tool is being used. As noted above, this dynamic threshold update may be used for longer applications, such as where the user pulls the trigger once and then uses the tool for several minutes. When the motor is running, it is difficult to directly measure the voltage of the pack. Accordingly, the SoC estimator estimates the DCIR of the pack and the voltage of the pack and uses this information to adjust the tool optimization processes 900 and 1000 described above and, in particular, avoid unnecessary power limits during long applications (uses of the device 300).

The SoC estimator uses a differential in current (e.g., of the inverter 451, which may be used to compute a current differential of the DC bus 452) and a differential in voltage (e.g., of the DC bus 452 output to the inverter 451) during an operating cycle of the device 300. These pieces of information are used to derive a *DCIR* (direct current internal resistance) for the battery pack, which can be added back to the voltage to estimate where the resting voltage will sit once the tool stops drawing power. In other words, the SoC estimator adjusts the target voltage/threshold in the processes 900 and 100 described above to account for battery depletion over time. In some embodiments, the *DCIR* may be computed according to equation (5) below:

$$DCIR = \frac{\Delta V_{DC\ bus}}{\Delta I_{DC\ bus,computed}} \qquad (5)$$

A resting voltage $V_{rest}$ of the battery pack can be computed as a function of the computed *DCIR,* wherein the computed resting voltage $V_{rest}$ may represent an estimate of the resting voltage of the battery pack after the motor 405 stops drawing load.

The controller 400 can update the threshold (for example, the threshold used at decision block 922 and/or decision block 1014) using the computed resting voltage $V_{rest}$. In various implementations, the controller 400 computes the updated threshold using techniques previously described with reference to blocks 906 and/or 1006, substituting the computed resting voltage $V_{rest}$ of the battery pack for the no-load voltage of the battery pack.

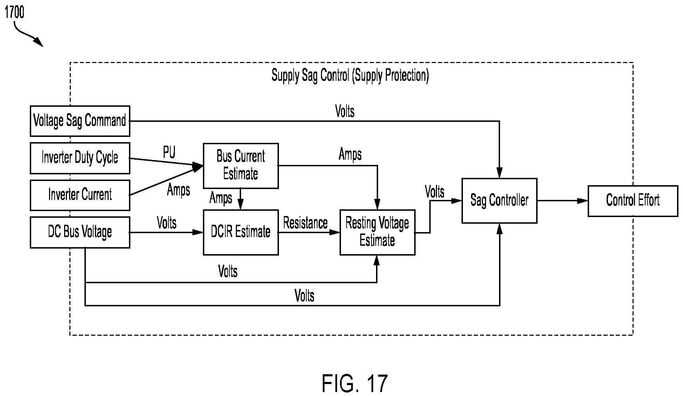

FIG. 17 is a block diagram 1700 illustrating measurements and calculations that may be used to implement control schemes according to the dynamic update threshold process described above. For example, a measured inverter duty cycle of the inverter 451 and a measured inverter current of the inverter 451 may be used to estimate a current value at the DC bus 452. A DC bus voltage of the DC bus 452 and the estimated current value of the DC bus 452 may be used to estimate a *DCIR.* The estimated current value at the DC bus 452, the estimated *DCIR,* and the DC bus voltage may be used to estimate a resting voltage of the battery pack. The estimated resting voltage may be used by a voltage sag controller, which may be implemented by controller 400, to update the threshold voltage. The controller 400 may then use the updated threshold voltage to control the motor 405. In some implementations, the estimated resting voltage of the battery pack may alternatively be used (on its own or with other data) as the voltage compared to the previously-calculated threshold, which similarly avoids unnecessary power reduction during long applications.

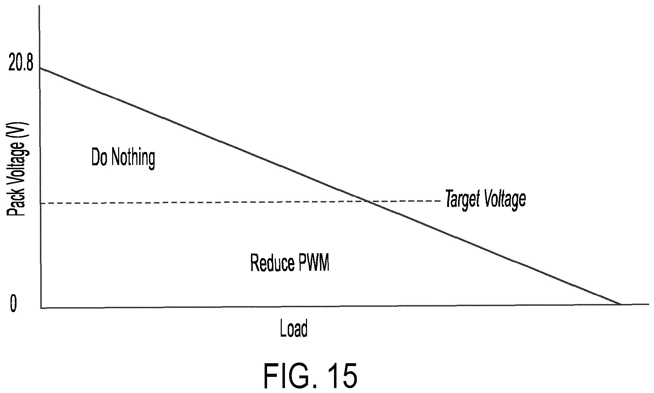

Accordingly, embodiments described herein use a threshold (e.g., a target voltage) representing a voltage drop or sag that distinguishes a battery pack with one capacity (or other characteristic) from a battery pack with a different capacity (or other characteristic). As noted above, the threshold may be set based on empirical data collected for a device and different battery packs in various operating applications and/or environments. For example, FIG. 15 is a graph illustrating voltage of a battery pack as a function of load and showing regions (e.g., particular load and pack voltage combinations) where a controller (hardware) generates an updated control signal (e.g., such as a reduced PWM signal to reduce an operating parameter of the motor 405), according to some embodiments described herein and regions where a controller (hardware) does not generate an updated control signal. As previously noted, in some implementations multiple thresholds may be used to establish more than two different categories of battery packs. Each category may be associated with different control signals for the motor 405 to optimize the operation of the motor for the category of the connected battery pack. As also previously noted, in some embodiments, the threshold(s) used by the systems and methods described herein may be further tuned to take into account operating applications and/or environments of the battery-powered device and/or the battery pack.

Thus, embodiments described herein provide, among other things, systems and methods for controlling operating sequences of battery-pack-powered devices. Various features and advantages are set forth in the following claims.

**Claims**

1. A battery-pack-powered device comprising:

   an interface configured to receive a battery pack;
   a sensing circuit configured to detect a voltage of the battery pack; and
   an electronic controller configured to:

      receive a first signal from the sensing circuit indicative of a no-load voltage of the battery pack,
      determine a threshold voltage based on the no-load voltage,
      generate a control signal for driving an electric motor of the device in response to an activation of a trigger switch, wherein the control signal drives the electric motor to operate at a first operating parameter,
      receive a second signal from the sensing circuit, the second signal indicative of an output voltage of the battery pack during operation of the electric motor, and
      update the control signal in response to the second signal indicating that the output voltage is below the threshold voltage, wherein the updated control signal drives the electric motor to operate at a second operating parameter, wherein the second operating parameter is less than the first operating parameter.

2. The battery-pack-powered device of claim 1, wherein the threshold voltage is determined as a percentage reduction of a nominal input voltage of the battery-pack-powered device.

3. The battery-pack-powered device of claim 2, wherein the percentage reduction is about a 25% reduction.

4. The battery-pack-powered device of any preceding claim, wherein a nominal input voltage of the battery-pack-powered device is about 18 volts and the threshold voltage is about 13.5 volts.

5. The battery-pack-powered device of any preceding claim, wherein:

   the control signal includes a first pulse-width-modulation signal;
   the updated control signal includes a second pulse-width-modulation signal; and
   a duty cycle of the first pulse-width-modulation signal is greater than a duty cycle of the second pulse-width-modulation signal.

6. The battery-pack-powered device of any preceding claim, wherein EITHER:

   the first operating parameter is a first power output;
   the second operating parameter a second power output; and
   the first power output is greater than the second power output;
   OR
   the first operating parameter is a first torque output;
   the second operating parameter a second torque output; and
   the first torque output is greater than the second torque output;
   OR
   the first operating parameter is a first operating duration;
   the second operating parameter a second operating duration; and
   the first operating duration is greater than the second operating duration.

7. A battery-pack-powered device comprising:

   an electric motor;
   an interface configured to receive a battery pack, the battery pack powering the electric motor;
   a sensing circuit configured to detect a voltage of the battery pack; and

EP 4 528 975 A2

an electronic controller configured to:

initiate a test current draw from the battery pack,
receive a first signal from the sensing circuit, the first signal indicative of an output voltage of the battery pack during the test current draw,

wherein the electronic controller is configured to generate a first control signal for controlling the electric motor in the first control mode; and
wherein the electronic controller is configured to generate a second control signal for controlling the electric motor in the second control mode, wherein the second control signal reduces an operating parameter of the electric motor as compared to the first control signal.

8. The battery-pack-powered device of claim 7, wherein the threshold is determined as a percentage reduction of a designed output voltage of the battery pack.

9. The battery-pack-powered device of claim 8, wherein the percentage reduction is about a 25% reduction.

10. The battery-pack-powered device of any one of claims 7 to 9, wherein a designed output voltage of the battery pack is about 18 volts and the threshold is about 13.5 volts.

11. The battery-pack-powered device of any one of claims 7 to 10, wherein EITHER:

the first control signal is a pulse-width-modulation signal having a first duty cycle;
the second control signal is a pulse-width-modulation signal having a second duty cycle; and
the first duty cycle is greater than the second duty cycle;
OR
the first control signal controls the electric motor to operate at a first power output;
the second control signal controls the electric motor to operate at a second power output; and
the first power output is greater than the second power output;
OR
the first control signal controls the electric motor to operate at a first torque output;
the second control signal controls the electric motor to operate at a second torque output; and
the first torque output is greater than the second torque output;
OR
the first control signal controls the electric motor to operate for a first duration;
the second control signal controls the electric motor to operate for a second duration; and
the first duration is longer than the second duration.

12. A method of operating a battery-pack-powered device, the method comprising:
in response to activation of a trigger switch:

measuring, with a controller, a first voltage of a battery pack electrically connected to the device before application of a load associated with activation of the trigger switch,
calculating, with the controller, a target voltage based on the first voltage, and
during application of the load associated with activation of the trigger switch:

measuring a second voltage of the battery pack,
comparing the second voltage to the target voltage, and
modifying operation of the battery-pack-powered device in response to the second voltage being less than the target voltage.

13. The method of claim 12, wherein calculating the target voltage includes reducing the first voltage by a predetermined percentage.

14. The method of claim 12 or claim 13, wherein modifying operation of the battery-pack-powered device includes modifying a pulse-width-modulated control signal for an electric motor of the battery-pack-powered device.

15. The method of any one of claims 12 to 14, wherein modifying operation of the battery-pack-powered device includes modifying operation of the battery-pack-powered device using a proportional integral control loop.

FIG. 1A

FIG. 1B

FIG. 2A

FIG. 2B

FIG. 3

FIG. 4

FIG. 5

FIG. 6A

FIG. 6B

FIG. 6C

FIG. 6D

FIG. 7

FIG. 8

FIG. 9A

A

916 — PROVIDE CONTROL SIGNAL TO FIELD-EFFECT TRANSISTOR (FET) SWITCHING MODULE

918 — MONITOR VOLTAGE SIGNAL OUTPUT FROM ANALOG-TO-DIGITAL CONVERTER

DETERMINE BATTERY PACK OUTPUT VOLTAGE BASED ON THE MONITORED VOLTAGE SIGNAL — 920

900

922 — BATTERY PACK OUTPUT VOLTAGE < THRESHOLD?

YES → GENERATE AN UPDATED CONTROL SIGNAL TO REDUCE AN OPERATING PARAMETER — 926

PROVIDE UPDATED CONTROL SIGNAL TO FET SWITCHING MODULE — 928

NO

CONTINUE MONITORING VOLTAGE SIGNAL OUTPUT FROM ANALOG-TO-DIGITAL CONVERTER — 924

FIG. 9B

1000

START

1002 — MEASURE NO-LOAD VOLTAGE SIGNAL OUTPUT FROM ANALOG-TO-DIGITAL CONVERTER

1004 — DETERMINE BATTERY PACK NO-LOAD VOLTAGE BASED ON THE MEASURED NO LOAD VOLTAGE SIGNAL

1006 — DETERMINE THRESHOLD BASED ON BATTERY PACK NO-LOAD VOLTAGE

1008 — INITIATE TEST CURRENT DRAW FROM BATTERY PACK

1010 — MONITOR VOLTAGE SIGNAL OUTPUT FROM ANALOG-TO-DIGITAL CONVERTER DURING TEST CURRENT DRAW

1012 — DETERMINE BATTERY PACK OUTPUT VOLTAGE BASED ON THE MONITORED VOLTAGE SIGNAL

B

FIG. 10A

1000

B

1014 — BATTERY PACK OUTPUT VOLTAGE < THRESHOLD?

NO → SELECT FIRST CONTROL MODE — 1016

YES

SELECT SECOND CONTROL MODE — 1020

MONITOR TRIGGER SWITCH FOR ACTIVATION — 1018

1022 — TRIGGER SWITCH ACTIVATED?

NO → CONTINUE MONITORING TRIGGER SWITCH FOR ACTIVATION — 1024

YES

GENERATE A CONTROL SIGNAL FOR THE MOTOR ACCORDING TO THE SELECTED CONTROL MODE — 1026

PROVIDE CONTROL SIGNAL TO FIELD-EFFECT TRANSISTOR (FET) SWITCHING MODULE — 1028

FIG. 10B

FIG. 11

Target Voltage → (+ −) → | PI Loop | → | Hardware | →PWM→ ( Motor )

Voltage Feedback

FIG. 12

**Pack Voltage**

FIG. 13

**Pack Voltage**

FIG. 14

FIG. 15

FIG. 16

1700

Supply Sag Control (Supply Protection)

| | |
|---|---|
| Voltage Sag Command | |

Volts

Inverter Duty Cycle → PU → Bus Current Estimate

Inverter Current → Amps

Amps → Amps

DC Bus Voltage → Volts → DCIR Estimate → Resistance → Resting Voltage Estimate

Amps → Resting Voltage Estimate → Volts → Sag Controller → Control Effort

Volts

Volts

FIG. 17

38

**EP 4 528 975 A2**

**REFERENCES CITED IN THE DESCRIPTION**

**Patent documents cited in the description**

- US 63584773